# EUROPEAN PATENT SPECIFICATION

(11) **EP 4 080 181 B1**
(45) Date of publication and mention of the grant of the patent: **02.07.2025**
(21) Application number: 20857927.6
(22) Date of filing: 23.10.2020
(51) Int. Cl.: G01L 1/04, G01L 1/02

(54) **NOVEL FOOT FORCE COLLECTION APPARATUS AND QUADRUPED ROBOT USING SAME**
NEUARTIGE FUSSKRAFT-SAMMLUNGSVORRICHTUNG UND VIERFUSS-ROBOTER DAMIT
NOUVEL APPAREIL DE COLLECTE DE FORCE DU PIED ET ROBOT QUADRUPÈDE UTILISANT CELUI-CI

(30) Priority: 28.08.2019 CN 201921416157 U
(43) Date of publication of application: 26.10.2022
(73) Proprietor: Hangzhou Yushu Technology Co., Ltd., Hangzhou, Zhejiang 310053 (CN)
(72) Inventor: WANG, Xingxing, Hangzhou, Zhejiang 310053 (CN)
(74) Representative: Cabinet Beau de Loménie
(86) International application number: PCT/CN2020/123185
(87) International publication number: WO 2021/037287

(56) References cited:
- CN-A- 102 670 217
- CN-A- 104 875 813
- CN-A- 107 825 430
- CN-U- 207 949 804
- CN-U- 210 180 564
- DE-A1- 102007 005 413
- JP-A- H04 171 194
- US-A1- 2002 026 838
- US-A1- 2013 213 146

## Description

### Technical Field

The present application relates to the technical field of robot equipment, in particular to a novel foot force acquisition apparatus and a quadruped robot using the same.

### Background Art

At present, the feet of the four legs of a quadruped robot are generally equipped with force sensors, and then electrical signals acquired by the force sensors are transmitted to a main control board for processing through cables. In this process, the cables need to pass through a second connecting rod, knee joint and a first connecting rod to the main control board, so that the electrical structure is relatively complex. US 2002/026838 A1, JP H04 171194 A and CN 104 875 813 A disclose examples of quadruped robots equipped with force sensors.

The traditional force sensor using a strain gauge or pressure sensitive resistor or capacitor is easily damaged when the foot is subjected to impact force, and its structure is complex. On the other hand, part of the electrical cable passes through a rotating connection (joint) between the first connecting rod and the second connecting rod. Due to reciprocating bending in the working process of the knee joint, this part of the electrical cable is very prone to fatigue damage.

### Summary

### Technical Problem

### Solution to Problem

### Technical Solution

In order to overcome the shortcomings of the prior art, a first purpose of the present application is to provide a novel foot force acquisition apparatus, which has the advantages that the foot force acquisition mode is simple, the force signal acquisition and transmission do not need electrical cables, the structure is simple, the cost is low, and it is not easy to cause faults.

A second purpose of the present application is to provide a quadruped robot including the foot force acquisition apparatus, which has the advantages that the foot force acquisition mode is simple, the force signal acquisition and transmission do not need electrical cables, the structure is simple, the cost is low, and it is not easy to cause faults.

The first purpose of the present application is realized by adopting the following technical solution:

A novel foot force acquisition apparatus as defined in claim 1.

Further, according to the change of air pressure, the force on the elastic foot pad may be obtained. The air chamber may be directly designed in the original elastic foot pad without adding additional parts. The force acquisition structure and mode are simple and reliable, and the cost is low.

Further, an end portion of the second connecting rod is provided with a foot pad mounting base and the elastic foot pad is fixedly provided on the foot pad mounting base. The elastic foot pad and the foot pad mounting base may be assembled together in advance to form a foot assembly, which is then fixedly connected to the second connecting rod, so as to facilitate mounting and replacement.

Further, the air tube is provided along the first connecting rod and the second connecting rod, and the air tube spans a rotating joint formed by the first connecting rod and the second connecting rod; the pressure signal acquisition board is provided on the first connecting rod or other components connected with the first connecting rod. The air tube is used to directly span the rotating joint, thus preventing the electrical cable that is more prone to fatigue damage from spanning the rotating joint, and improving the reliability. After the sensor is moved up to the inside of the first connecting rod or further moved up to other components, the sensor is not influenced by the external environment, thus reducing the probability of sensor failure. In addition, the traditional electrical cable is not required to bypass the joint, but the elastic air tube is used to bypass the joint, thus reducing fatigue damage in the process of reciprocating rotation of the joint.

Further, the air tube and the air chamber are in an integrated or split structure; the air tube and the air chamber are capable of being filled with gas or liquid. The filler in the air tube and air chamber may be selected according to the actual working temperature, the detected force and the like.

Further, a tube groove for placing the air tube is provided in the foot pad mounting base. The tube groove is provided in the foot pad mounting base, thus facilitating the communication between the air tube and the air chamber, so that the structure is simple and reliable.

Further, the first connecting rod or the second connecting rod is provided with a mounting groove or a mounting cavity for placing the air tube. The air tube on the first connecting rod and the second connecting rod is easy to swing with the rotation of the second connecting rod relative to the first connecting rod. After multiple reciprocating swings, the air tube is easy to move. Therefore, the mounting groove or mounting cavity is provided to fix the air tube, so that the structure is simple and reliable and the integration level is high.

Further, an elastic member capable of pulling the air tube is provided in the first connecting rod or the second connecting rod, one end of the elastic member is fixedly connected with the first connecting rod or the second connecting rod, and the other end is fixedly connected with the air tube, so that a portion of the air tube located at the rotating joint is always kept in a tensioned state during the rotation of the second connecting rod relative to the first connecting rod. The elastic member is provided, so that the air tube is always kept in a regular tensioned state during the rotation of the second connecting rod relative to the first connecting rod, rather than randomly twists or shakes, the structure is simple and reliable, and the fatigue life of the air tube spanning the rotating joint is further improved.

Further, the elastic member is a tension spring, a compression spring, a torsion spring, elastic silica gel or elastic plastic.

The second purpose of the present application is realized by adopting the following technical solution:

A quadruped robot includes the novel foot force acquisition apparatus as defined beforehand.

In the present application, since the air chamber is provided in the foot and the internal pressure value of the air chamber is acquired through the air tube, there is no need to provide a sensor in the foot, thus reducing the probability of sensor failure. Since the air tube is used for pressure signal acquisition and transmission, the foot and the second connecting rod do not need any electronic circuit at all, thus avoiding cable wear that influences the acquisition and transmission of pressure signals. Relatively, the signal acquisition in the present application is more reliable and stable.

### Beneficial Effects of the Application

### Beneficial Effects

1. In the novel foot force acquisition apparatus provided by the present application, for the acquisition of signals, by providing the force signal acquisition board and providing the air chamber in the foot, the internal pressure value of the air chamber is acquired through the air tube and there is no need to provide a sensor in the foot, thus reducing the probability of sensor failure. Since the air tube is used for pressure signal acquisition and transmission, the foot and the second connecting rod do not need any electronic circuit at all, thus avoiding cable wear that influences the acquisition and transmission of pressure signals. Relatively, the signal acquisition in the present application is more reliable and stable.

2. The quadruped robot provided by the present application includes the foot force acquisition apparatus. For the acquisition of signals, by providing the force signal acquisition board and providing the air chamber in the foot, the internal pressure value of the air chamber is acquired through the air tube and there is no need to provide a sensor in the foot, thus reducing the probability of sensor failure. Since the air tube is used for pressure signal acquisition and transmission, the foot and the second connecting rod do not need any electronic circuit at all, thus avoiding cable wear that influences the acquisition and transmission of pressure signals. Relatively, the signal acquisition in the present application is more reliable and stable.

### Brief Description of the Drawings

### Description of the Drawings

FIG. 1 is a schematic view of an overall structure according to the present application.
FIG. 2 is a cross-sectional view according to the present application.
FIG. 3 is an A-A sectional view according to the present application.
FIG. 4 is a B-B sectional view according to the present application.

In the drawings, 1-first connecting rod; 2-second connecting rod; 4-air tube; 5-elastic foot pad; 6-air chamber; 7-foot pad mounting base; 8-tube groove.

### Description of the Embodiments

### Description of the Embodiments of the Application

The present application will be further described below in combination with the specific embodiments with reference to the drawings. It should be noted that on the premise of no conflict, the embodiments or technical features described below may be combined freely to form new embodiments.

It should be noted that when two components are "fixedly connected", the two components may be directly connected or there may be an intermediate component. Unless otherwise defined, all technical and scientific terms used herein have the same meanings as those generally understood by those skilled in the technical field of the present application. The terms used herein are only for the purpose of describing the specific embodiments and are not intended to limit the present invention as defined by the claims.

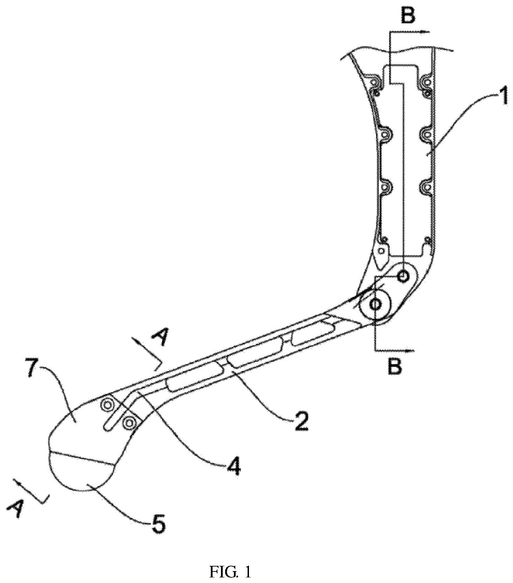

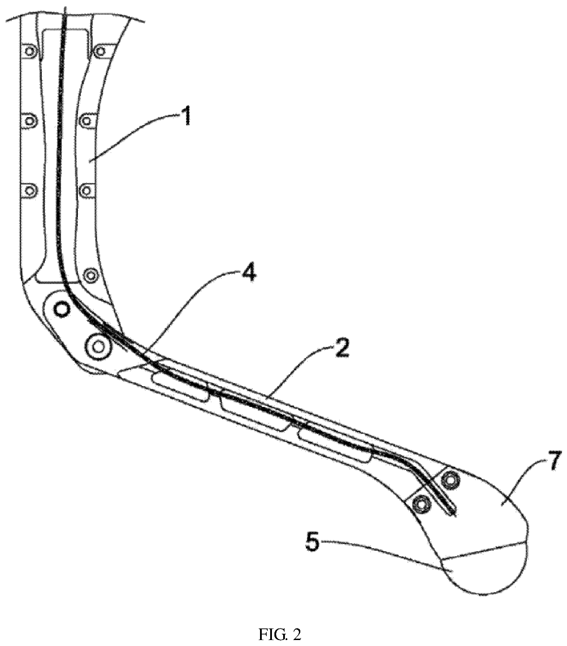

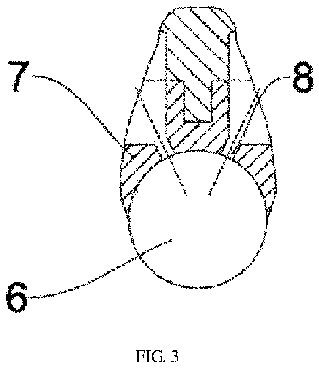

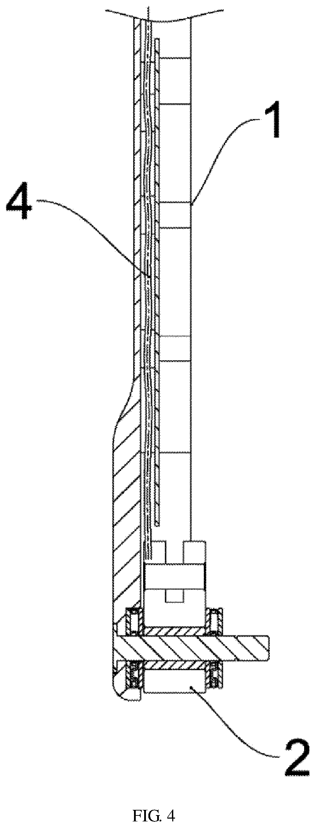

Referring to FIG. 1 to FIG. 4, a novel foot force acquisition apparatus includes a first connecting rod 1, a pressure signal acquisition board provided on the first connecting rod 1, a second connecting rod 2 rotatably connected with the first connecting rod 1, and an air tube 4 provided in the first connecting rod 1 and the second connecting rod 2. The air tube 4 is an elastic hose. An end portion of the second connecting rod 2 is fixedly provided with an elastic foot pad 5. An air chamber 6 is provided in the elastic foot pad 5. One end of the air tube 4 is communicated with the air chamber 6, and the other end bypasses a rotating connection between the first connecting rod 1 and the second connecting rod 2 and is connected with the pressure signal acquisition board. When the elastic foot pad 5 contacts the ground to deform and squeeze the air chamber 6, the pressure signal acquisition board measures the change of the internal pressure value of the air chamber 6 through the air tube 4 to realize the signal acquisition of the force on the elastic foot pad 5, and then the force on the elastic foot pad 5 may be obtained according to the change of the air pressure value. The pressure signal acquisition board may also be provided on other parts fixedly connected with the first connecting rod 1.

The arrangement of the air tube 4 in the present application is as follows:

In the above embodiment, the air tube 4 is provided along the first connecting rod 1 and the second connecting rod 2. The air tube 4 spans a rotating joint formed by the first connecting rod 1 and the second connecting rod 2. The pressure signal acquisition board is provided on the first connecting rod 1 or other components connected with the first connecting rod 1. The air tube 4 is used to directly span the rotating joint (knee joint), thus preventing the electrical cable that is more prone to fatigue damage from spanning the rotating joint, and improving the reliability. The air tube 4 and the air chamber 6 are in an integrated or split structure. The air tube 4 and the air chamber 6 are capable of being filled with gas or liquid. The filler in the air tube 4 and the air chamber 6 may be selected according to the actual working temperature, the detected force and the like.

An end portion of the second connecting rod 2 is provided with a foot pad mounting base 7. The elastic foot pad 5 is fixedly provided on the foot pad mounting base 7. The elastic foot pad 5 and the foot pad mounting base 7 are directly and fixedly connected or integrally formed. The elastic foot pad and the foot pad mounting base may be assembled together in advance to form a foot assembly, which is then fixedly connected to the second connecting rod to facilitate mounting and replacement. A tube groove 8 for placing the air tube 4 is provided in the foot pad mounting base 7. The tube groove 8 is provided in the foot pad mounting base 7, thus facilitating the communication between the air tube 4 and the air chamber 6. In addition, the tube groove 8 is symmetrically provided in the foot pad mounting base 7, and the tube groove 8 may be selected according to the mounting needs.

The second connecting rod 2 and the first connecting rod 1 are provided with a mounting groove or a mounting cavity for placing the air tube 4. The air tube 4 is easy to swing with the rotation of the second connecting rod 2 relative to the first connecting rod 1. After multiple reciprocating swings, the air tube 4 is easy to move. Therefore, a mounting groove is provided to fix the air tube 4.

Embodiment of elastic member additionally provided in the present application:

An elastic member capable of pulling the air tube 4 is arranged in the first connecting rod 1 or the second connecting rod 2. One end of the elastic member is fixedly connected with the first connecting rod 1 or the second connecting rod 2, and the other end is fixedly connected with the air tube 4, so that a portion of the air tube 4 located at the rotating joint is always kept in a tensioned state during the rotation of the second connecting rod 2 relative to the first connecting rod 1. The elastic member is provided, so that the air tube 4 is always kept in a regular tensioned state during the rotation of the second connecting rod 2 relative to the first connecting rod 1, rather than randomly twists or shakes, the structure is simple and reliable, and the fatigue life of the air tube 4 spanning the rotating joint is further improved. The elastic member is a tension spring, a compression spring, a torsion spring, elastic silica gel or elastic plastic.

Embodiment of compact structure in the present application:

A novel foot force acquisition apparatus includes a second connecting rod 2 and an air tube 4. An end portion of the second connecting rod 2 is fixedly provided with an elastic foot pad 5. The elastic foot pad 5 is provided with an air chamber 6. One end of the air tube 4 is communicated with the air chamber 6. The elastic foot pad 5 contacts the ground to deform and squeeze the air chamber 6, so as to realize the signal acquisition of the force on the elastic foot pad 5.

In the present application, since the air chamber is provided in the foot and the internal pressure value of the air chamber is acquired through the air tube, there is no need to provide a sensor in the foot, thus reducing the probability of sensor failure. Since the air tube is used for pressure signal acquisition and transmission, the foot and the second connecting rod do not need any electronic circuit at all, thus avoiding cable wear that influences the acquisition and transmission of pressure signals. Relatively, the signal acquisition in the present application is more reliable and stable.

Further provided is an embodiment of a quadruped robot, which includes the novel foot force acquisition apparatus as defined in the claims.

The above embodiments are only the preferred embodiments of the present application and should not be intended to limit the scope of protection of the present invention as defined by the claims.

Any non-substantive changes and replacements made by those skilled in the art on the basis of the present application still fall within the scope of protection of the present invention.

## Claims

1. A novel foot force acquisition apparatus, wherein the novel foot force acquisition apparatus comprises a first connecting rod (1), a pressure signal acquisition board, a second connecting rod (2) rotatably connected with the first connecting rod (1), and an air tube (4); an end portion of the second connecting rod (2) is fixedly provided with an elastic foot pad (5), the elastic foot pad (5) is provided with an air chamber (6), one end of the air tube (4) is communicated with the air chamber (6), and the other end is connected to the pressure signal acquisition board; the elastic foot pad (5) is configured to contact the ground to deform and squeeze the air chamber (6), and the pressure signal acquisition board is configured to measure the change of the internal pressure value of the air chamber (6) through the air tube (4), so as to realize the signal acquisition of the force on the elastic foot pad (5), wherein the first connecting rod (1) or the second connecting rod (2) is provided with a mounting groove or a mounting cavity for placing the air tube (4), **characterized in that** the air tube (4) is provided along the first connecting rod (1) and the second connecting rod (2), and the air tube (4) spans a rotating joint formed by the first connecting rod (1) and the second connecting rod (2) and an elastic member,
which is a tension spring, a compression spring, a torsion spring, elastic silica gel or elastic plastic, and which is capable of pulling the air tube (4), is provided in the first connecting rod (1) or the second connecting rod (2), one end of the elastic member is fixedly connected with the first connecting rod (1) or the second connecting rod (2), and the other end is fixedly connected with the air tube (4), so that a portion of the air tube (4) located at the rotating joint is always kept in a tensioned state during the rotation of the second connecting rod (2) relative to the first connecting rod (1).

2. The novel foot force acquisition apparatus according to claim 1, wherein an end portion of the second connecting rod (2) is provided with a foot pad mounting base (7) and the elastic foot pad (5) is fixedly provided on the foot pad mounting base (7).

3. The novel foot force acquisition apparatus according to claim 2, wherein the pressure signal acquisition board is provided on the first connecting rod (1) or other components connected with the first connecting rod (1).

4. The novel foot force acquisition apparatus according to claim 3, wherein the air tube (4) and the air chamber (6) are in an integrated or split structure; the air tube (4) and the air chamber (6) are capable of being filled with gas or liquid.

5. The novel foot force acquisition apparatus according to claim 4, wherein a tube groove (8) for placing the air tube (4) is provided in the foot pad mounting base (7).

6. A quadruped robot comprising the novel foot force acquisition apparatus according to any one of claims 1-5.

## Patentansprüche

1. Neuartige Vorrichtung zur Erfassung von Fußkraft, wobei die neuartige Vorrichtung zur Erfassung von Fußkraft eine erste Verbindungsstange (1), eine Platine zur Erfassung von Drucksignalen, eine zweite Verbindungsstange (2), die drehbarmit der ersten Verbindungsstange (1) verbunden ist, und einen Luftschlauch (4) umfasst, ein Endabschnitt der zweiten Verbindungsstange (2) fest mit einem elastischen Fußballen (5) versehen, der elastische Fußballen (5) mit einer Luftkammer (6) versehen ist, ein Ende des Luftschlauchs (4) mit der Luftkammer (6) in Verbindung steht und das andere Ende mit der Platine zur Erfassung von Drucksignalen verbunden ist, der elastische Fußballen (5) dafür gestaltet ist, den Boden zu berühren, um sich zu verformen und die Luftkammer (6) zusammenzudrücken, und die Platine zur Erfassung von Drucksignalen dafür gestaltet ist, die Änderung des Wertes des Innendrucks der Luftkammer (6) über den Luftschlauch (4) zu messen, um die Signalerfassung der Kraft an dem elastischen Fußballen (5) zu realisieren, wobei die erste Verbindungsstange (1) oder die zweite Verbindungsstange (2) mit einer Montagekerbe oder einem Montagehohlraum zum Platzieren des Luftschlauchs (4) versehen ist, **dadurch gekennzeichnet, dass** der Luftschlauch (4) entlang der ersten Verbindungsstange (1) und der zweiten Verbindungsstange (2) bereitgestellt ist und sich der Luftschlauch (4) über ein Drehgelenk hinweg erstreckt, das von der ersten Verbindungsstange (1) und der zweiten Verbindungsstange (2) gebildet wird, und ein elastisches Element, das eine Zugfeder, eine Druckfeder, eine Torsionsfeder, elastisches Silicagel oder elastischer Kunststoff ist und das den Luftschlauch (4) ziehen kann, in der ersten Verbindungsstange (1) oder der zweiten Verbindungsstange (2) bereitgestellt ist, ein Ende des elastischen Elements fest mit der ersten Verbindungsstange (1) oder der zweiten Verbindungsstange (2) verbunden ist und das andere Ende fest mit dem Luftschlauch (4) verbunden ist, so dass ein Abschnitt des Luftschlauchs (4), der sich an dem Drehgelenk befindet, während der Drehung der zweiten Verbindungsstange (2) in Bezug auf die erste Verbindungsstange (1) stets in einem gespannten Zustand gehalten wird.

2. Neuartige Vorrichtung zur Erfassung von Fußkraft nach Anspruch 1, wobei ein Endabschnitt der zweiten Verbindungsstange (2) mit einer Fußballen-Montagebasis (7) versehen ist und der elastische Fußballen (5) fest an der Fußballen-Montagebasis (7) bereitgestellt ist.

3. Neuartige Vorrichtung zur Erfassung von Fußkraft nach Anspruch 2, wobei die Platine zur Erfassung von Drucksignalen an der ersten Verbindungsstange (1) oder anderen, mit der ersten Verbindungsstange (1) verbundenen Komponenten bereitgestellt ist.

4. Neuartige Vorrichtung zur Erfassung von Fußkraft nach Anspruch 3, wobei der Luftschlauch (4) und die Luftkammer (6) in einer integrierten oder einer geteilten Struktur vorliegen, der Luftschlauch (4) und die Luftkammer (6) mit Gas oder Flüssigkeit gefüllt sein können.

5. Neuartige Vorrichtung zur Erfassung von Fußkraft nach Anspruch 4, wobei eine Schlauchkerbe (8) zum Platzieren des Luftschlauchs (4) in der Fußballen-Montagebasis (7) bereitgestellt ist.

6. Vierbeiniger Roboter, die neuartige Vorrichtung zur Erfassung von Fußkraft nach einem der Ansprüche 1 bis 5 umfassend.

## Revendications

1. Nouvel appareil d'acquisition de force de pied, dans lequel le nouvel appareil d'acquisition de force de pied comprend une première tige de raccordement (1), une plaque d'acquisition de signal de pression, une deuxième tige de raccordement (2) raccordée de manière rotative à la première tige de raccordement (1) et un tube à air (4) ; une partie d'extrémité de la deuxième tige de raccordement (2) est pourvue de manière fixe d'un coussinet de pied élastique (5), le coussinet de pied élastique (5) est pourvu d'une chambre à air (6), une extrémité du tube à air (4) est en communication avec la chambre à air (6), et l'autre extrémité est raccordée à la plaque d'acquisition de signal de pression ; le coussinet de pied élastique (5) est configuré pour venir en contact avec le sol afin de déformer et comprimer la chambre à air (6), et la plaque d'acquisition de signal de pression est configurée pour mesurer le changement de la valeur de pression interne de la chambre à air (6) par l'intermédiaire du tube à air (4), de sorte à réaliser l'acquisition de signal de la force sur le coussinet de pied élastique (5), dans lequel la première tige de raccordement (1) ou la deuxième tige de raccordement (2) est pourvue d'une gorge de montage ou d'une cavité de montage pour placer le tube à air (4), **caractérisé en ce que** le tube à air (4) est prévu le long de la première tige de raccordement (1) et de la deuxième tige de raccordement (2), et le tube à air (4) s'étend à travers une articulation rotative formée par la première tige de raccordement (1) et la deuxième tige de raccordement (2) et un élément élastique, qui est un ressort de tension, un ressort de compression, un ressort de torsion, du gel de silice élastique ou du plastique élastique, et qui est apte à tirer le tube à air (4), est prévu dans la première tige de raccordement (1) ou la deuxième tige de raccordement (2), une extrémité de l'élément élastique est raccordée de manière fixe à la première tige de raccordement (1) ou à la deuxième tige de raccordement (2), et l'autre extrémité est raccordée de manière fixe au tube à air (4), de telle sorte qu'une partie du tube à air (4) située au niveau de l'articulation rotative est toujours maintenue dans un état tendu pendant la rotation de la deuxième tige de raccordement (2) par rapport à la première tige de raccordement (1).

2. Nouvel appareil d'acquisition de force de pied selon la revendication 1, dans lequel une partie d'extrémité de la deuxième tige de raccordement (2) est pourvue d'une base de montage de coussinet de pied (7) et le coussinet de pied élastique (5) est prévu de manière fixe sur la base de montage de coussinet de pied (7).

3. Nouvel appareil d'acquisition de force de pied selon la revendication 2, dans lequel la plaque d'acquisition de signal de pression est prévue sur la première tige de raccordement (1) ou d'autres composants raccordés à la première tige de raccordement (1).

4. Nouvel appareil d'acquisition de force de pied selon la revendication 3, dans lequel le tube à air (4) et la chambre à air (6) se présentent sous la forme d'une structure intégrée ou divisée ; le tube à air (4) et la chambre à air (6) sont aptes à être remplis de gaz ou de liquide.

5. Nouvel appareil d'acquisition de force de pied selon la revendication 4, dans lequel une gorge de tube (8) pour placer le tube à air (4) est prévue dans la base de montage de coussinet de pied (7).

6. Robot quadrupède comprenant le nouvel appareil d'acquisition de force de pied selon l'une quelconque des revendications 1 à 5.
